(19) Europäisches Patentamt
European Patent Office
Office européen des brevets

(11) EP 4 269 131 A1

(12) # EUROPEAN PATENT APPLICATION

(43) Date of publication:
**01.11.2023 Bulletin 2023/44**

(21) Application number: **23164000.4**

(22) Date of filing: **24.03.2023**

(51) International Patent Classification (IPC):
***B60C 1/00*** *(2006.01)*

(52) Cooperative Patent Classification (CPC):
**B60C 1/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2022 JP 2022072242**

(71) Applicant: **Sumitomo Rubber Industries, Ltd.**
**Kobe-shi, Hyogo 651-0072 (JP)**

(72) Inventor: **TASHIRO, Mizuki**
**Chuo-ku, Kobe-shi, 651-0072 (JP)**

(74) Representative: **TBK**
**Bavariaring 4-6**
**80336 München (DE)**

(54) **TIRE**

(57) Provided is a tire having excellent durability during high-speed driving. The present invention relates to a tire including a tread portion and a belt-reinforcing layer, the belt-reinforcing layer containing a reinforcement material including a compound represented by the following formula (1):

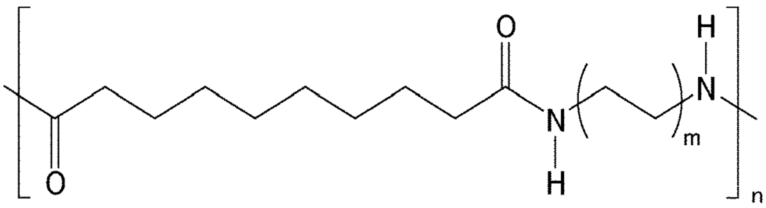

(1)

wherein m is 2 or 3, and n is an integer, the tire satisfying relationship (2) with respect to the equivalent cross-sectional diameter d (mm) of the reinforcement material and the distance L (mm) from the tread groove bottom to the belt-reinforcing layer.

EP 4 269 131 A1

FIG.1

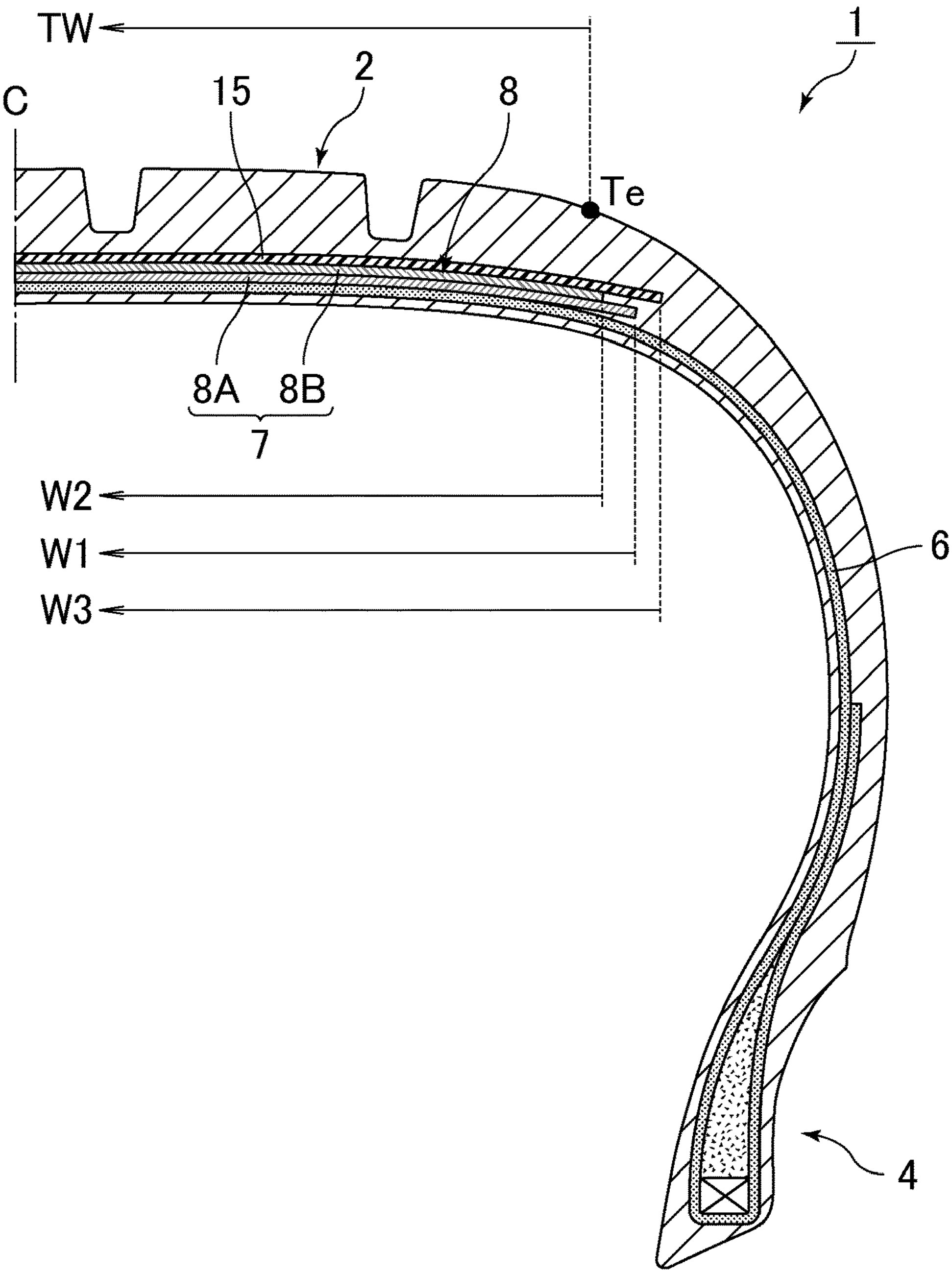

## Description

### TECHNICAL FIELD

The present invention relates to a tire.

### BACKGROUND ART

Various techniques have been proposed to improve tire properties such as durability. In recent years, however, it has become desirable to improve durability, particularly during high-speed driving.

### SUMMARY OF INVENTION

### TECHNICAL PROBLEM

The present invention aims to solve the above problem and provide a tire having excellent durability during high-speed driving.

### SOLUTION TO PROBLEM

The present invention relates to a tire, including a tread portion and a belt-reinforcing layer,

the belt-reinforcing layer containing a reinforcement material including a compound represented by the following formula (1):

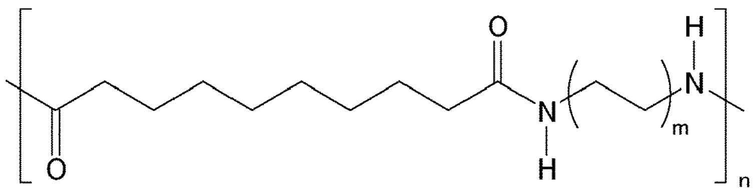

(1)

wherein m is 2 or 3, and n is an integer,
the tire satisfying the following relationship (2):

$$(2)\ d/L \leq 0.80$$

wherein d represents an equivalent cross-sectional diameter (mm) of the reinforcement material, and L represents a distance (mm) from a tread groove bottom to the belt-reinforcing layer.

### ADVANTAGEOUS EFFECTS OF INVENTION

The tire of the present invention includes a tread portion and a belt-reinforcing layer, and the belt-reinforcing layer contains a reinforcement material including a compound of formula (1). Further, the tire satisfies relationship (2). Thus, the present invention provides a tire having excellent durability during high-speed driving.

### BRIEF DESCRIPTION OF DRAWINGS

FIG. 1 is a cross-sectional view of a pneumatic tire according to the present invention.
FIG. 2 is an enlarged view of a belt layer and a belt-reinforcing layer shown in FIG. 1.
FIG. 3 is an enlarged view of a tread portion.

DESCRIPTION OF EMBODIMENTS

The tire of the present invention includes a tread portion and a belt-reinforcing layer. Further, the belt-reinforcing layer contains a reinforcement material including a compound of formula (1), and the tire satisfies relationship (2) with respect to the equivalent cross-sectional diameter d (mm) of the reinforcement material and the distance L (mm) from the tread groove bottom to the belt-reinforcing layer.

The reason for the above-mentioned advantageous effect is not exactly clear, but the advantageous effect is believed to be due to the following mechanism.

During high-speed driving where a great centrifugal force is applied to the tread portion and the tread portion can be easily deformed by the centrifugal force, it is desirable to further improve durability.

The present invention uses a belt-reinforcing layer with a compound of formula (1) that has a longer dicarboxylic acid chain length than conventionally used nylon 6,6. As a result, the distance between hydrogen bonds formed within the polyamide is larger in the dicarboxylic acid moiety. Thus, it is considered that the molecular chain is more likely to moderately stretch and is thus less likely to break even when the centrifugal force is increased.

At the same time, it is considered that as the diamine has a number of carbon atoms that is equal to or smaller than that in the prior art, hydrogen bonds may be formed at a short distance to maintain or enhance the strength.

Particularly when the carboxylic acid has 10 carbon atoms, it is considered that other polyamide molecules may not be entangled in the carboxylic acid moiety, resulting in regular crystallinity. Since when the carboxylic acid chain length is extended, the carbon chain bonded to oxygen atoms is restrained to only planar movement, it is also considered that better crystallinity may be obtained in spite of the long carbon chain.

Moreover, when the distance from the belt-reinforcing layer to the tread groove bottom is shortened, the deformation of the tread portion during rolling may be easily transferred to the cords in the belt-reinforcing layer, possibly causing fracture. Meanwhile, when the equivalent cross-sectional diameter of the reinforcement material is too large relative to the distance to the groove bottom, the deformation of the tread portion may become relatively large, possibly causing concentration of distortion at the interface with the belt-reinforcing layer. Thus, it is considered that the concentration of distortion at the reinforcement material and the interface may be reduced by adjusting the ratio of the equivalent cross-sectional diameter of the reinforcement material to the distance from the belt-reinforcing layer to the tread groove bottom to satisfy relationship (2).

Because of the above mechanism of action, it is believed that the present invention provides improved durability during high-speed driving.

Thus, the present invention solves the problem (purpose) of improving durability during high-speed driving by formulating a tire which includes a tread and satisfies the relationship (2): $d/L \leq 0.80$ in which d represents the equivalent cross-sectional diameter of the reinforcement material, and L represents the distance from the tread groove bottom to the belt-reinforcing layer. In other words, the parameter of the relationship (2): $d/L \leq 0.80$ does not define the problem (purpose) and the problem herein is to improve durability during high-speed driving. In order to solve this problem, the tire has been formulated to satisfy the parameter.

An embodiment of the present invention is described below with reference to the drawings, but the embodiment is merely an example and the tire of the present invention is not limited to the embodiment.

FIG. 1 shows an exemplary meridional cross-sectional view of the right half of a pneumatic tire (hereinafter, also simply referred to as "tire") 1 according to the present embodiment in the normal state, including a tire rotation axis (not shown). Although the tire 1 shown in FIG. 1 is, for example, for passenger cars, the present invention may be applied to a tire 1 for motorcycles, heavy duty vehicles, or other applications.

The "normal state" means that the tire 1 is mounted on a normal rim (not shown), inflated to a normal internal pressure, and under no load.

The "normal rim" refers to a rim specified for each tire by the standard in a standard system including standards according to which the tire 1 is provided, and may be, for example, "standard rim" in JATMA, "design rim" in TRA, or "measuring rim" in ETRTO.

The "normal internal pressure" refers to an air pressure specified for each tire by the standard in a standard system including standards according to which the tire 1 is provided, and may be "maximum air pressure" in JATMA, the maximum value shown in Table "TIRE LOAD LIMITS AT VARIOUS COLD INFLATION PRESSURES" in TRA, or "inflation pressure" in ETRTO.

The tire 1 of the present embodiment includes a belt layer 7 embedded inside a tread portion 2. The belt layer 7 contains at least one belt ply 8. In the tire 1, a belt-reinforcing layer 15 is disposed outward of the belt layer 7 with respect to the radial direction of the tire. For example, the tire 1 also includes a carcass 6 having a well-known structure, which is disposed inward of the belt layer 7 with respect to the tire radial direction and extends between bead portions 4 on opposite sides.

FIG. 2 is an enlarged view of the belt plies 8 and the belt-reinforcing layer 15.

As shown in FIG. 2, the belt ply 8 includes belt cords 9 and a topping rubber 10 coating the belt cords 9. Although

each belt cord 9 in the present embodiment is a single wire having a circular transverse section, it is not limited to this embodiment and may be a cord having a M × N structure in which N bundles of M filaments are intertwined with each other. Moreover, the cross-sectional shape of each filament is not limited to a circular shape, and it may have other shapes, such as an oval or polygonal shape in transverse section. In view of properties such as durability, the filaments may also be preformed before use.

As shown in FIG. 2, for example, the belt plies 8 include a first belt ply 8A and a second belt ply 8B that is adjacent to the first belt ply 8A in the tire radial direction. For example, the second belt ply 8B is located outward of the first belt ply 8A with respect to the tire radial direction.

For example, the width W1 in the tire axial direction of the first belt ply 8A is desirably 70 to 100% of the tread width TW. For example, the width W2 in the tire axial direction of the second belt ply 8B is desirably 65 to 90% of the tread width TW. Moreover, the second belt ply preferably has a smaller width than the first belt ply.

The term "tread width TW" refers to the distance in the tire axial direction between the tread edges Te, Te on opposite sides with respect to the tire axial direction. The term "tread edge Te" refers to the axially outermost contact position of the tire 1 determined when a normal load is applied to the tire 1 in the above-described normal state and contacted with a plane at a camber angle of 0 degrees. The tread width TW may be determined by measuring the distance between the contact edges in the tire axial direction in a cross-section of the tire taken along the radial direction, with the width between the bead portions being fixed to the normal rim width. Moreover, the width W1 of the first belt ply and the width W2 of the second belt ply may also be determined by measuring the distance between the respective edges in the tire axial direction in a cross-section of the tire taken along the radial direction, with the width between the bead portions being fixed to the normal rim width.

The "normal load" refers to a load specified for each tire by the standard in a standard system including standards according to which the tire 1 is provided, and may be "maximum load capacity" in JATMA, the maximum value shown in Table "TIRE LOAD LIMITS AT VARIOUS COLD INFLATION PRESSURES" in TRA, or "load capacity" in ETRTO.

The belt cords 9 in the present embodiment are examples formed of steel cords. Such belt cords 9 can reduce deformation of the belt ply 8 during driving. Here, for example, the belt cords 9 may be formed of organic fiber cords such as aramid. The belt cords 9 in the first belt ply 8A and the belt cords 9 in the second belt ply 8B may be of the same material or the same shape or may be of different materials or different shapes.

The belt cords 9 are desirably inclined at an angle of 15 to 45 degrees with respect to the tire circumferential direction.

The belt cords 9 in the first belt ply 8A and the belt cords 9 in the second belt ply 8B are desirably inclined in opposite directions with respect to the tire circumferential direction so that the respective cords cross each other, though the present invention is not limited to this embodiment.

In view of adhesion to the rubber composition coating surrounding the belt cords 9, a plating containing copper and zinc is preferably applied to the surface of each belt cord 9. Moreover, a plating is more preferably applied which contains a metallic element whose ionization tendency is between those of copper and zinc, such as cobalt, nickel, bismuth, or antimony, in addition to the copper and zinc.

Also, in view of adhesion to the surrounding rubber composition, the belt cords 9 preferably have a polybenzoxazine compound layer on the surface.

The topping rubber 10 coating the belt cords 9 desirably contains a well-known rubber material as well as a phenolic thermosetting resin, silica, a salt of an organic fatty acid and a metal whose ionization tendency is between those of copper and zinc, such as cobalt, nickel, bismuth, or antimony as described above, a polybenzoxazine compound, or other materials.

For example, the number of ends of the belt cords 9 per 50 mm width of the belt ply 8 is preferably 30 to 100, more preferably 30 to 80. Moreover, the cross-sectional area of the cords per 50 mm in the tire width direction, which is the product of the number of ends of the belt cords 9 (ends/50 mm) and the cross-sectional area of each belt cord ($mm^2$), is preferably 4.5 $mm^2$/50 mm or more, more preferably 4.8 $mm^2$/50 mm or more.

In the tire 1, the belt-reinforcing layer 15 can enhance the restraint of the belt plies 8A and 8B, thereby enhancing durability during high-speed driving.

Moreover, the belt-reinforcing layer 15 may have two belt-reinforcing layers only at both ends.

Like the tread width TW, the width W3 of the belt-reinforcing layer (the width in the tire axial direction of the belt-reinforcing layer 15) may be determined by measuring the distance between the ends of the belt-reinforcing layer 15 in the tire axial direction in a cross-section of the tire taken along the radial direction, with the width between the bead portions being fixed to the normal rim width.

The belt-reinforcing layer 15 contains a reinforcement material 16 (reinforcement cords) and a reinforcement rubber 17 (coating rubber composition for belt-reinforcing layer) coating the reinforcement cords 16.

The reinforcement material 16 (reinforcement cords) of the belt-reinforcing layer 15 includes a compound (fatty acid polyamide) represented by the following formula (1):

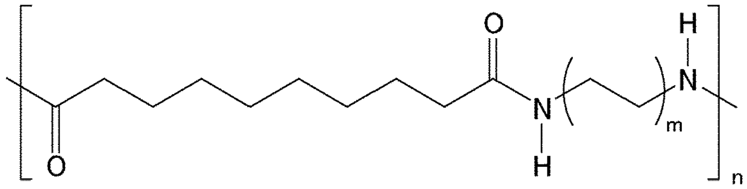

(1)

wherein m is 2 or 3, and n is an integer.

The lower limit of the n in the formula is preferably 100 or more, more preferably 150 or more, still more preferably 200 or more, while the upper limit is preferably 10000 or less, more preferably 5000 or less, still more preferably 1000 or less. When the n is within the range indicated above, the advantageous effect can be suitably achieved.

Examples of the compound of formula (1) include poly(hexamethylene sebacamide) (nylon 6,10) and poly(tetramethylene sebacamide) (nylon 4,10). Each of these compounds may be used alone, or two or more of these may be used.

The aliphatic diamine unit and aliphatic dicarboxylic acid unit of the poly(hexamethylene sebacamide) (nylon 6,10) are a hexamethylene diamine unit and a sebacic acid unit, respectively. The aliphatic diamine unit and aliphatic dicarboxylic acid unit of the poly(tetramethylene sebacamide) (nylon 4,10) are a tetramethylene diamine unit and a sebacic acid unit, respectively.

The poly(hexamethylene sebacamide) (nylon 6,10) and poly(tetramethylene sebacamide) (nylon 4,10) having these units may be produced, for example, by polycondensation of a diamine and a dicarboxylic acid.

The relative viscosity of the compound (fatty acid polyamide) of formula (1) is preferably 1.5 or more, more preferably 1.8 or more, still more preferably 2.0 or more, while it is preferably 5.5 or less, more preferably 5.3 or less, still more preferably 5.0 or less. When the relative viscosity is within the range indicated above, the advantageous effect can be suitably achieved.

Herein, the relative viscosity is measured at a concentration of 1% by mass in 96% by mass sulfuric acid at 25°C in accordance with JIS K-6920.

The melting point of the compound (fatty acid polyamide) of formula (1) is preferably 150°C or higher, more preferably 170°C or higher, still more preferably 180°C or higher, while it is preferably 245°C or lower, more preferably 235°C or lower, still more preferably 230°C or lower, particularly preferably 225°C or lower. When the melting point is within the range indicated above, the advantageous effect can be suitably achieved.

Herein, the melting point is determined from the endothermic peak top temperature observed using a differential scanning calorimeter (DSC) upon heating from room temperature to an anticipated melting point or higher to cause melting under conditions in which the sample amount is about 1 mg, the ambient gas is a nitrogen flow at 30 mL/min, and the rate of temperature increase is 10°C/min.

The reinforcement material 16 (reinforcement cords) including the compound (fatty acid polyamide) of formula (1) is desirably formed from cords having a number of twists of 9.0 to 65.0 (t/10 cm). The number of twists is preferably 10.0 t/10 cm or more, more preferably 20.0 t/10 cm or more, still more preferably 25.0 t/10 cm or more, particularly preferably 31.5 t/10 cm or more. The upper limit is preferably 60.0 t/10 cm or less, more preferably 50.0 t/10 cm or less, still more preferably 42.0 t/10 cm or less, particularly preferably 35.0 t/10 cm or less. When the number of twists is within the range indicated above, the advantageous effect can be suitably achieved.

The reason why the above-mentioned advantageous effect can be provided when the number of twists is in a predetermined range is not exactly clear, but the advantageous effect is believed to be due to the following mechanism.

When the number of twists is not less than the lower limit, it is considered that upon the application of an external force during high-speed driving, the reinforcement material may moderately stretch to permit deformation and conformity, so that interfacial separation can be inhibited. Also, when the number of twists is not more than the upper limit, it is believed that excessive stretching may be inhibited, and therefore the durability during high-speed driving can be significantly improved.

The reinforcement material 16 (reinforcement cords) including the compound (fatty acid polyamide) of formula (1) is desirably formed from cords having a total fineness of 450 to 5500 dtex. The total fineness is preferably 500 dtex or more, more preferably 2800 dtex or more, still more preferably 3500 dtex or more, particularly preferably 4200 dtex or more. The upper limit is preferably 5000 dtex or less, more preferably 4600 dtex or less, still more preferably 4500 dtex or less, particularly preferably 4400 dtex or less. When the total fineness is within the range indicated above, the advantageous effect can be suitably achieved.

The reason why the above-mentioned advantageous effect can be provided when the total fineness is in a predetermined range is not exactly clear, but the advantageous effect is believed to be due to the following mechanism.

When the total fineness is not less than the lower limit, the density within the reinforcement material may be increased, resulting in higher strength. Also, when the total fineness is not more than the upper limit, the rubber of the adjacent component may penetrate between the reinforcement material pieces, so that damage caused by concentration of distortion at that area can be easily inhibited, resulting in good durability. Therefore, it is believed that the durability during high-speed driving can be significantly improved.

The compound (fatty acid polyamide) of formula (1) may be prepared from raw materials including at least one or more recyclable raw materials. For example, it is advantageous in terms of resource conservation to use the compound of formula (1) prepared from a plant oil-based material, such as castor oil, instead of a mineral oil-based material.

Besides poly(hexamethylene sebacamide) (nylon 6,10) and poly(tetramethylene sebacamide) (nylon 4,10), the reinforcement material 16 (reinforcement cords) may contain other materials.

Examples of such other materials include aliphatic polyamides, such as poly(6-aminohexanoic acid) (nylon 6) which is also known as poly(caprolactam), poly(laurolactam) (nylon 12), poly(hexamethylene adipamide) (nylon 6,6), poly(7-aminoheptanoic acid) (nylon 7), poly(8-aminooctanoic acid) (nylon 8), poly(9-aminononanoic acid) (nylon 9), poly(10-aminodecanoic acid) (nylon 10), poly(11-aminoundecanoic acid) (nylon 11), poly(decamethylene sebacamide) (nylon 10,10), poly(hexamethylene azelamide) (nylon 6,9), poly(tetramethylene adipamide) (nylon 4,6), poly(pentamethylene adipamide) (nylon 5,6), poly(pentamethylene sebacamide) (nylon 5,10), hexamethylene adipamide-caprolactam copolymers (nylon 6,6/6), poly[methylenebis(2-methylcyclohexyl)dodecamide] (nylon MACM12), and poly[4,4'-methylenebis(cyclohexyl)dodecamide] (nylon PACM12). Each of these materials may be used alone, or two or more of these may be used.

The reinforcement material 16 (reinforcement cords) may include nylon 6,10 or nylon 4,10 alone or may include a combination of two or more. They may be combined by any method, such as by twisting the filaments into a single cord, or by aligning the respective fibers in the belt-reinforcing layer 15. To suitably achieve the advantageous effect, the reinforcement material 16 (reinforcement cords) preferably include hybrid cords prepared by twisting two types of fibers having different stiffnesses.

Examples of the hybrid cords include hybrid cords of polyester fibers and nylon 6,10 and/or nylon 4,10, and hybrid cords of aramid fibers and nylon 6,10 and/or nylon 4,10.

The reinforcement material 16 (reinforcement cords) desirably has an equivalent cross-sectional diameter d (mm) satisfying the following relationship:

$$0.14 \text{ mm} < d < 2.300 \text{ mm}.$$

The d is preferably more than 0.20 mm, more preferably 0.28 mm or more, still more preferably more than 0.68 mm, particularly preferably more than 0.83 mm. The upper limit is preferably less than 1.20 mm, more preferably less than 1.00 mm, still more preferably less than 0.95 mm, particularly preferably less than 0.90 mm. When the d is within the range indicated above, the advantageous effect can be suitably achieved.

The reason why the above-mentioned advantageous effect can be provided when the equivalent cross-sectional diameter d is in a predetermined range, particular when $0.20 \text{ mm} < d < 1.00 \text{ mm}$, is not exactly clear, but the advantageous effect is believed to be due to the following mechanism.

When the d is not less than the lower limit, the reinforcement material may provide higher strength, thereby improving durability during high-speed driving. At the same time, when the d is not more than the upper limit, the rubber of the adjacent component may penetrate between the reinforcement material pieces, so that damage caused by concentration of distortion at that area can be easily inhibited, resulting in good durability. Therefore, it is believed that the durability during high-speed driving can be significantly improved.

Herein, the equivalent cross-sectional diameter of the reinforcement material 16 (reinforcement cords) refers to the diameter of a circle having the same area as the actual cross-sectional area of the reinforcement material 16 (reinforcement cords). The equivalent cross-sectional diameter can be determined from the diameter of a circle having the same area as the average cross-sectional area of the reinforcement material 16 measured within ± 50 mm in the tire width direction from the tire equator in a cross-section of the tire taken along the radial direction, with the width between the bead portions being fixed to the normal rim width.

For example, the reinforcement material 16 (reinforcement cords) is preferably aligned at an angle within ±10° with respect to the tire circumferential direction. This can enhance restraint in the tire circumferential direction to improve durability. Although the reinforcement material 16 (reinforcement cords) in the present embodiment has a circular transverse section, it is not limited to a circular shape and may have other shapes, such as an oval or polygonal shape in transverse section.

Moreover, to suitably achieve the advantageous effect, the reinforcement material 16 (reinforcement cords) is desirably aligned at a density such that the number of ends of the reinforcement cords per 50 mm width in the tire axial direction is 30 to 80. The lower limit of the number of ends is preferably 34 or more, more preferably 45 or more, while

the upper limit is preferably 78 or less, more preferably 68 or less.

The reason why the above-mentioned advantageous effect can be provided when the number of ends of the reinforcement material (reinforcement cords) is in a predetermined range is not exactly clear, but the advantageous effect is believed to be due to the following mechanism.

When the number of ends is not less than the lower limit, the density of the reinforcement material in the reinforcing layer may be increased to enhance restraint, thereby ensuring durability during high-speed driving. At the same time, when the number of ends is not more than the upper limit, good adhesion to the coating rubber layer may be ensured, resulting in good durability. Therefore, it is believed that the durability during high-speed driving can be significantly improved.

To suitably achieve the advantageous effect, the ratio (%) of the cross-sectional area of the reinforcement material 16 (reinforcement cords) to the cross-sectional area of the belt-reinforcing layer 15 per 50 mm width in the tire axial direction is desirably 15 to 55%. The lower limit is preferably 25% or higher, more preferably 30% or higher, still more preferably 35% or higher, particularly preferably 40% or higher, while the upper limit is preferably 50% or lower, more preferably 45% or lower.

The reason why the above-mentioned advantageous effect can be provided when the ratio of the cross-sectional area of the reinforcement material (reinforcement cords) to the cross-sectional area of the belt-reinforcing layer is in a predetermined range is not exactly clear, but the advantageous effect is believed to be due to the following mechanism.

When the ratio of the cross-sectional area of the reinforcement material (reinforcement cords) is not lower than the lower limit, the density of the reinforcement material in the reinforcing layer may be increased to enhance restraint, thereby ensuring durability during high-speed driving. At the same time, when the ratio of the cross-sectional area of the reinforcement material is not higher than the upper limit, stress concentration at the coating rubber portion between the reinforcement material pieces may be inhibited. Therefore, it is believed that the durability during high-speed driving can be significantly improved.

Here, the above-mentioned number of ends of the reinforcement material can be determined by measuring the number of pieces of the reinforcement material aligned within ± 50 mm in the tire width direction from the equator in a radial cross-section of the tire, with the width between the bead portions being adjusted to the normal rim width, and then calculating the number of pieces per 50 mm.

Moreover, the above-mentioned ratio of the cross-sectional area of the reinforcement material 16 can be determined by measuring the thickness S (mm) of the belt-reinforcing layer on the equator in a cross-section of the tire taken along the radial direction, with the width between the bead portions being fixed to the normal rim width, and then performing calculation using the following equation:

$$\text{Area ratio} = (\text{Number of ends} \times \text{Cross-sectional area of each cord})/(S \times 50) \times 100.$$

Moreover, to ensure good adhesion to the coating rubber layer, an adhesive layer is preferably applied to the reinforcement material 16 in advance. The adhesive layer may be a known one. Examples include those prepared by treatment with resorcinol-formaldehyde-rubber latex (RFL); those prepared by epoxy treatment, e.g., with an adhesive composition containing a sorbitol polyglycidyl ether and a blocked isocyanate followed by treatment with RFL; and those prepared by treatment with an adhesive composition containing a halohydrin compound, a blocked isocyanate compound, and a rubber latex.

Examples of the resorcinol-formaldehyde-rubber latex (RFL) include an adhesive composition which contains a natural rubber and/or a synthetic rubber latex as well as a co-condensation product of phenol-formaldehyde and resorcinol, as described in JP S48-11335 A, which is herein incorporated by reference. For example, such an adhesive composition may be prepared by a method including condensing phenol and formaldehyde in the presence of an alkaline catalyst, copolymerizing an aqueous phenol-formaldehyde resin solution and resorcinol, and mixing the resulting phenol-formaldehyde-resorcinol resin solution with a rubber latex.

Here, the synthetic rubber latex may be a butadiene polymer latex, a styrene/butadiene copolymer latex, an isoprene polymer latex, a butadiene/acrylonitrile copolymer latex, a butadiene/vinylpyridine polymer latex, a butadiene/vinylpyridine/styrene copolymer latex, etc.

The adhesive layer including the resorcinol-formaldehyde-rubber latex (RFL) may be formed by adding a RFL adhesive, for example, dipping (DIP) the reinforcement material 16 in a RFL liquid. Although the RFL adhesive is usually adhered after fiber cords are produced by twisting, it may be adhered before or during the twisting process.

The composition of the RFL adhesive is not limited and may be appropriately selected. In particular, the composition preferably contains 0.1 to 10% by mass of resorcinol, 0.1 to 10% by mass of formaldehyde, and 1 to 28% by mass of latex, and more preferably contains 0.5 to 3% by mass of resorcinol, 0.5 to 3% by mass of formaldehyde, and 10 to 25% by mass of latex.

For example, heat treatment may be performed by drying the reinforcement material 16 with the RFL adhesive composition adhered thereto at 100 to 250°C for one to five minutes, and then heating it at 150 to 250°C for one to five minutes. The heating after the drying is desirably carried out at 180 to 240°C for one to two minutes.

The adhesive composition containing a sorbitol polyglycidyl ether and a blocked isocyanate may be any composition that contains a sorbitol polyglycidyl ether and a blocked isocyanate. The adhesive composition is desirably a composition that contains an epoxy compound which is a sorbitol polyglycidyl ether and has a chlorine content of 9.6% by mass or lower, and a blocked isocyanate.

Examples of the sorbitol polyglycidyl ether include sorbitol diglycidyl ether, sorbitol triglycidyl ether, sorbitol tetraglycidyl ether, sorbitol pentaglycidyl ether, and sorbitol hexaglycidyl ether, and mixtures thereof. The sorbitol polyglycidyl ether may include sorbitol monoglycidyl ether. The sorbitol polyglycidyl ether contains a number of epoxy groups per molecule and can form a highly crosslinked structure.

The chlorine content of the sorbitol polyglycidyl ether is preferably 9.6% by mass or lower, more preferably 9.5% by mass or lower, still more preferably 9.4% by mass or lower, particularly preferably 9.3% by mass or lower. The lower limit of the chlorine content is not limited and may be 1% by mass or more, for example.

Herein, the chlorine content of the sorbitol polyglycidyl ether can be determined as described in JIS K 7243-3, for example.

The chlorine content of the sorbitol polyglycidyl ether may be lowered, for example, by reducing the amount of epichlorohydrin used to synthesize the epoxy compound.

The blocked isocyanate is a compound formed by the reaction of an isocyanate compound with a blocking agent and which is temporarily inactivated by the group derived from the blocking agent. Upon heating at a predetermined temperature, the group derived from the blocking agent may dissociate to form an isocyanate group.

Examples of the isocyanate compound include those containing two or more isocyanate groups in the molecule.

Examples of usable diisocyanates containing two isocyanate groups include hexamethylene diisocyanate, diphenylmethane diisocyanate, xylylene diisocyanate, isophorone diisocyanate, phenyhlene diisocyanate, tolylene diisocyanate, trimethylhexamethylene diisocyante, meta-phenylene diisocyanate, naphthalene diisocyanate, diphenyl ether diisocyanate, diphenylpropane diisocyanate, and biphenyl diisocyanate, and their isomers, alkyl-substituted products, halides, benzene ring-hydrogenated products. Also usable are triisocyanates containing three isocyanate groups, tetraisocyanates containing four isocyanate groups, and polymethylene polyphenyl polyisocyanate. Each of these isocyanate compounds may be used alone, or two or more of these may be used in combination. Tolylene diisocyanate, meta-phenylene diisocyanate, diphenylmethane diisocyanate, hexamethylene diisocyanate, and polymethylene polyphenyl polyisocyanate are preferred among these.

Examples of the blocking agent include lactam blocking agents such as ε-caprolactam, δ-valerolactam, γ-butyrolactam, and β-propiolactam; phenolic blocking agents such as phenol, cresol, resorcinol, and xylenol; alcoholic blocking agents such as methanol, ethanol, n-propyl alcohol, isopropyl alcohol, n-butyl alcohol, isobutyl alcohol, tert-butyl alcohol, ethylene glycol monoethyl ether, ethylene glycol monobutyl ether, diethylene glycol monoethyl ether, propylene glycol monomethyl ether, and benzyl alcohol; oxime blocking agents such as formamidoxime, acetaldoxime, acetoxime, methyl ethyl ketoxime, diacetyl monoxime, benzophenone oxime, and cyclohexanone oxime; and active methylene blocking agents such as dimethyl malonate, diethyl malonate, ethyl acetoacetate, methyl acetoacetate, and acetylacetone. Lactam, phenolic, and oxime blocking agents are preferred among these.

In the adhesive composition containing a sorbitol polyglycidyl ether and a blocked isocyanate, the amount of the blocked isocyanate per 100 parts by mass of the sorbitol polyglycidyl ether is preferably 50 parts by mass or more, more preferably 200 parts by mass or more. The upper limit is preferably 500 parts by mass or less, more preferably 400 parts by mass or less.

The adhesive composition containing a sorbitol polyglycidyl ether and a blocked isocyanate may contain the following optional components as needed: for example, epoxy compounds other than sorbitol polyglycidyl ethers, resins copolymerizable with sorbitol polyglycidyl ethers, curing agents other than blocked isocyanates, organic thickeners, antioxidants, light stabilizers, adhesion promoters, reinforcing agents, softeners, colorants, leveling agents, flame retardants, and antistatic agents.

Examples of epoxy compounds other than sorbitol polyglycidyl ethers include glycidyl ethers such as ethylene glycol glycidyl ether, glycerol polyglycidyl ether, diglycerol polyglycidyl ether, polyglycerol polyglycidyl ether, bisphenol A diglycidyl ether, bisphenol S diglycidyl ether, novolac glycidyl ether, and brominated bisphenol A diglycidyl ether; glycidyl esters such as hexahydrophthalic acid glycidyl ester and dimeric acid glycidyl ester; glycidylamines such as triglycidyl isocyanurate, glycidyl hydantoin, tetraglycidyl diaminodiphenylmethane, triglycidyl para-aminophenol, triglycidyl meta-aminophenol, diglycidyl aniline, diglycidyl toluidine, tetraglycidyl meta-xylenediamine, diglycidyl tribromaniline, and tetraglycidyl bisaminomethylcyclohexane; and alicyclic or aliphatic epoxides such as 3,4-epoxycyclohexylmethylcarboxylate, epoxidized polybutadiene, and epoxidized soybean oil.

The treatment with the adhesive composition containing a sorbitol polyglycidyl ether and a blocked isocyanate may be, for example, a treatment performed to adhere the various components in RFL to the reinforcement material 16

or a treatment optionally including subsequent heat treatment.

For example, the adhesion may be carried out by any method such as application using a roller, spraying through a nozzle, or dipping in a bath liquid (adhesive composition). From the standpoint of uniform adhesion and removal of excessive adhesive, adhesion by dipping is preferred.

Moreover, to control the amount of adhesion to the reinforcement material 16, an additional means may be used such as squeezing with a pressure roller, scraping off with a scraper or the like, blowing off with air, suction, or beating with a beater.

The amount of adhesion to the reinforcement material 16 is preferably 1.0% by mass or more, more preferably 1.5% by mass or more, while it is preferably 3.0% by mass or less, more preferably 2.5% by mass or less.

Here, the amount of adhesion to the reinforcement material 16 refers to the amount of solids in the RFL adhesive adhered per 100 parts by mass of the reinforcement material 16.

The total solid concentration in the adhesive composition containing a sorbitol polyglycidyl ether and a blocked isocyanate is preferably 0.9% by mass or more, more preferably 14% by mass or more, while it is preferably 29% by mass or less, more preferably 23% by mass or less.

To the adhesive composition containing a sorbitol polyglycidyl ether and a blocked isocyanate may be added resorcinol, formaldehyde, and rubber latex, as well as a vulcanization modifier, zinc oxide, an antioxidant, a defoaming agent, etc.

For example, heat treatment may be performed by drying the reinforcement material 16 with the RFL adhesive composition adhered thereto at 100 to 250°C for one to five minutes, and then heating it at 150 to 250°C for one to five minutes. The heating after the drying is desirably carried out at 180 to 240°C for one to two minutes.

The adhesive composition containing a halohydrin compound, a blocked isocyanate compound, and a rubber latex may be any composition that contains these components. It is desirably an adhesive composition which contains a halohydrin compound, a blocked isocyanate compound, and a rubber latex and does not contain resorcinol and formaldehyde.

Examples of the halohydrin compound include compounds produced by reacting a polyol compound with an epihalohydrin compound (halohydrin ether).

A polyol compound refers to a compound having two or more hydroxy groups in the molecule. Examples include glycols such as ethylene glycol, propylene glycol, polyethylene glycol, and polypropylene glycol; hydroxy acids such as erythritol, xylitol, sorbitol, and tartaric acid; glyceric acid, glycerol, diglycerol, polyglycerol, trimethylolpropane, trimethylolethane, and pentaerythritol.

Examples of the epihalohydrin compound include epichlorohydrin and epibromohydrin.

Examples of the halohydrin compound include fluoroalcohol compounds, chlorohydrin compounds, bromohydrin compounds, and iodohydrin compounds. Halogenated sorbitol or halogenated glycerol is preferred among these.

The halogen content based on 100% by mass of the halohydrin compound is preferably 5.0 to 15.0% by mass, more preferably 7.0 to 13.0% by mass, still more preferably 9.0 to 12.0% by mass.

Examples of the blocked isocyanate compound include the compounds described for the above-mentioned blocked isocyanate. Moreover, examples of the rubber latex include those described for the above-mentioned rubber latex.

The adhesive composition containing a halohydrin compound, a blocked isocyanate compound, and a rubber latex desirably contains 10.0 to 30.0 parts by mass of the halohydrin compound, 10.0 to 30.0 parts by mass of the blocked isocyanate compound, and 80.0 to 240.0 parts by mass of the rubber latex. Moreover, the adhesive composition does not contain resorcinol and formaldehyde.

The adhesive layer including the adhesive composition containing a halohydrin compound, a blocked isocyanate compound, and a rubber latex may be formed from the adhesive composition on the surface of the reinforcement material 16. For example, the adhesive layer may be formed by, but not limited to, dipping, brushing, casting, spraying, roll coating, knife coating, etc.

In the belt-reinforcing layer 15, the coating rubber composition for the belt-reinforcing layer (reinforcement rubber 17) coating the reinforcement cords 16 contains one or more rubber components.

The rubber components in the coating rubber composition for the belt-reinforcing layer contribute to crosslinking and generally correspond to polymer components which have a weight average molecular weight (Mw) of 10,000 or more and which are not extractable with acetone. The rubber components are solid at room temperature (25°C).

The weight average molecular weight of the rubber components is preferably 50,000 or more, more preferably 150,000 or more, still more preferably 200,000 or more, while it is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined using a gel permeation chromatograph (GPC) (GPC-8000 series available from Tosoh Corporation, detector: differential refractometer, column: TSKGEL SUPERMULTIPORE HZ-M available from Tosoh Corporation) relative to polystyrene standards.

Examples of rubber components that may be used in the coating rubber composition for the belt-reinforcing layer include diene rubbers. Examples of the diene rubbers include isoprene-based rubbers, polybutadiene rubbers (BR), styrene-butadiene rubbers (SBR), styrene-isoprene-butadiene rubbers (SIBR), ethylene-propylene-diene rubbers (EPDM), chloroprene rubbers (CR), and acrylonitrile-butadiene rubbers (NBR). Other examples include butyl-based rubbers and fluororubbers. These may be used alone or in combinations of two or more. To better achieve the advantageous effect, isoprene-based rubbers, BR, and SBR are preferred among these, with isoprene-based rubbers being more preferred. These rubber components may also be subjected to the below-described modification or hydrogenation process. Rubbers extended with oils, resins, liquid rubber components, etc. are also usable.

The diene rubbers may be either unmodified or modified diene rubbers.

The modified diene rubbers may be any diene rubber having a functional group interactive with filler such as silica. Examples include a chain end-modified diene rubber obtained by modifying at least one chain end of a diene rubber with a compound (modifier) having the above functional group (i.e., a chain end-modified diene rubber terminated with the functional group); a backbone-modified diene rubber having the functional group in the backbone; a backbone- and chain end-modified diene rubber having the functional group in both the backbone and chain end (e.g., a backbone- and chain end-modified diene rubber in which the backbone has the functional group and at least one chain end is modified with the modifier); and a chain end-modified diene rubber into which a hydroxy or epoxy group has been introduced by modification (coupling) with a polyfunctional compound having two or more epoxy groups in the molecule.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. Here, these functional groups may be substituted. Amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups) are preferred among these.

Examples of the isoprene-based rubbers include natural rubbers (NR), polyisoprene rubbers (IR), refined NR, modified NR, and modified IR. Examples of the NR include those commonly used in the rubber industry such as SIR20, RSS#3, and TSR20. Any IR may be used, and examples include those commonly used in the rubber industry such as IR2200. Examples of the refined NR include deproteinized natural rubbers (DPNR) and highly purified natural rubbers (UPNR). Examples of the modified NR include epoxidized natural rubbers (ENR), hydrogenated natural rubbers (HNR), and grafted natural rubbers. Examples of the modified IR include epoxidized polyisoprene rubbers, hydrogenated polyisoprene rubbers, and grafted polyisoprene rubbers. These may be used alone or in combinations of two or more.

The amount of isoprene-based rubbers based on 100% by mass of the rubber components in the coating rubber composition for the belt-reinforcing layer is preferably 5% by mass or more, more preferably 50% by mass or more, still more preferably 75% by mass or more, particularly preferably 85% by mass or more, and may be 100% by mass. When the amount is within the range indicated above, the advantageous effect tends to be better achieved.

Any BR may be used. Examples include high-cis BR having a high cis content, BR containing syndiotactic polybutadiene crystals, and BR synthesized using rare earth catalysts (rare earth-catalyzed BR). These may be used alone or in combinations of two or more. In particular, the BR preferably includes high-cis BR having a cis content of 90% by mass or more. The cis content is more preferably 95% by mass or more. Here, the cis content can be measured by infrared absorption spectrometry.

Moreover, the BR may be either unmodified or modified BR. Examples of the modified BR include those into which functional groups as listed for the modified diene rubbers have been introduced. The BR may also be hydrogenated polybutadiene polymers (hydrogenated BR).

The BR may be commercially available from, for example, Ube Industries, Ltd., JSR Corporation, Asahi Kasei Corporation, Zeon Corporation, etc.

When the coating rubber composition for the belt-reinforcing layer contains BR, the amount of BR based on 100% by mass of the rubber components is preferably 5% by mass or more, more preferably 10% by mass or more, still more preferably 15% by mass or more. The upper limit is preferably 50% by mass or less, more preferably 30% by mass or less, still more preferably 20% by mass or less. When the amount is within the range indicated above, the advantageous effect tends to be better achieved.

Any SBR may be used. Examples include emulsion-polymerized styrene-butadiene rubbers (E-SBR) and solution-polymerized styrene-butadiene rubbers (S-SBR). These may be used alone or in combinations of two or more.

The styrene content of the SBR is preferably 5% by mass or higher, more preferably 20% by mass or higher, still more preferably 25% by mass or higher. The styrene content is preferably 45% by mass or lower, more preferably 40% by mass or lower, still more preferably 35% by mass or lower. When the styrene content is within the range indicated above, the handling stability during high-speed driving tends to be improved.

Herein, the styrene content can be determined by $^{1}H$-NMR analysis.

The vinyl bond content of the SBR is preferably 3% by mass or higher, more preferably 5% by mass or higher, still more preferably 7% by mass or higher. The vinyl bond content is preferably 25% by mass or lower, more preferably

15% by mass or lower, still more preferably 13% by mass or lower. When the vinyl bond content is within the range indicated above, the handling stability during high-speed driving tends to be improved.

Herein, the vinyl bond content (1,2-butadiene unit content) can be determined by infrared absorption spectrometry.

The SBR may be either unmodified or modified SBR. Examples of the modified SBR include those into which functional groups as listed for the modified diene rubbers have been introduced. The SBR may also be hydrogenated styrene-butadiene copolymers (hydrogenated SBR).

SBR products manufactured or sold by Sumitomo Chemical Co., Ltd., JSR Corporation, Asahi Kasei Corporation, Zeon Corporation, etc. may be used as the SBR.

When the coating rubber composition for the belt-reinforcing layer contains SBR, the amount of SBR based on 100% by mass of the rubber components is preferably 5% by mass or more, more preferably 10% by mass or more, still more preferably 15% by mass or more. The upper limit is preferably 50% by mass or less, more preferably 30% by mass or less, still more preferably 20% by mass or less. When the amount is within the range indicated above, the advantageous effect tends to be better achieved.

The coating rubber composition for the belt-reinforcing layer may contain a filler.

Any filler may be used, including materials known in the rubber field. Examples include inorganic fillers such as carbon black, silica, calcium carbonate, talc, alumina, clay, aluminum hydroxide, aluminum oxide, and mica; and hard-to-disperse fillers.

The total amount of fillers (the total amount of fillers such as silica and carbon black) per 100 parts by mass of the rubber components in the coating rubber composition for the belt-reinforcing layer is preferably 5 parts by mass or more, more preferably 20 parts by mass or more, still more preferably 40 parts by mass or more, particularly preferably 50 parts by mass or more. The upper limit of the amount is preferably 120 parts by mass or less, more preferably 100 parts by mass or less, still more preferably 80 parts by mass or less. When the total amount is within the range indicated above, the advantageous effect tends to be better achieved.

Carbon-based fillers (carbon-containing fillers) such as carbon black, and silica are preferred among the fillers.

Any carbon black may be used in the coating rubber composition for the belt-reinforcing layer, and examples include N134, N110, N220, N234, N219, N339, N330, N326, N351, N550, and N762. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more. In addition to the conventional carbon black made from mineral oils, etc., carbon black made from biomass materials such as lignin is also usable.

The nitrogen adsorption specific surface area ($N_2SA$) of the carbon black is preferably 30 $m^2/g$ or more, more preferably 50 $m^2/g$ or more, still more preferably 70 $m^2/g$ or more. The $N_2SA$ is also preferably 200 $m^2/g$ or less, more preferably 150 $m^2/g$ or less, still more preferably 130 $m^2/g$ or less, particularly preferably 120 $m^2/g$ or less. When the $N_2SA$ is within the range indicated above, the advantageous effect tends to be better achieved.

When the coating rubber composition for the belt-reinforcing layer contains carbon black, the amount of carbon black per 100 parts by mass of the rubber components is preferably 5 parts by mass or more, more preferably 20 parts by mass or more, still more preferably 40 parts by mass or more, particularly preferably 50 parts by mass or more. The upper limit of the amount is preferably 120 parts by mass or less, more preferably 100 parts by mass or less, still more preferably 80 parts by mass or less. When the amount is within the range indicated above, the advantageous effect tends to be better achieved.

Examples of usable silica include dry silica (anhydrous silica) and wet silica (hydrous silica). Wet silica is preferred among these because it contains a large number of silanol groups. Usable commercial products are available from Degussa, Rhodia, Tosoh Silica Corporation, Solvay Japan, Tokuyama Corporation, etc. These may be used alone or in combinations of two or more. In addition to these types of silica, silica made from biomass materials such as rice husks is also usable.

The nitrogen adsorption specific surface area ($N_2SA$) of the silica is preferably 50 $m^2/g$ or more, more preferably 100 $m^2/g$ or more, still more preferably 150 $m^2/g$ or more, particularly preferably 180 $m^2/g$ or more, most preferably 190 $m^2/g$ or more. Moreover, the upper limit of the $N_2SA$ of the silica is not limited, but it is preferably 350 $m^2/g$ or less, more preferably 300 $m^2/g$ or less, still more preferably 250 $m^2/g$ or less. When the $N_2SA$ is within the range indicated above, the advantageous effect tends to be better achieved.

Here, the $N_2SA$ of the silica is measured by a BET method in accordance with ASTM D3037-93.

When the coating rubber composition for the belt-reinforcing layer contains silica, the amount of silica per 100 parts by mass of the rubber components is preferably 5 parts by mass or more, more preferably 20 parts by mass or more, still more preferably 40 parts by mass or more, particularly preferably 50 parts by mass or more. The upper limit of the amount is preferably 120 parts by mass or less, more preferably 100 parts by mass or less, still more preferably 80 parts by mass or less. When the amount is within the range indicated above, the advantageous effect tends to be better achieved.

When the coating rubber composition for the belt-reinforcing layer contains silica, it preferably further contains a silane coupling agent.

Any silane coupling agent may be used, including those known in the rubber field. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica in the coating rubber composition for the belt-reinforcing layer is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

Examples of hard-to-disperse fillers include microfibrillated plant fibers, short fibrous cellulose, and gel compounds. Microfibrillated plant fibers are preferred among these.

To obtain good reinforcement, cellulose microfibrils are preferred among the microfibrillated plant fibers. Any cellulose microfibril derived from natural products may be used. Examples include those derived from: resource biomass such as fruits, grains, and root vegetables; wood, bamboo, hemp, jute, and kenaf, and pulp, paper, or cloth produced therefrom; waste biomass such as agricultural waste, food waste, and sewage sludge; unused biomass such as rice straw, wheat straw, and thinnings; and celluloses produced by ascidians, acetic acid bacteria, or other organisms. These microfibrillated plant fibers may be used alone or in combinations of two or more.

Herein, the term "cellulose microfibrils" typically refers to cellulose fibers having an average fiber diameter of not more than 10 μm, more typically cellulose fibers having a microstructure with an average fiber diameter of not more than 500 nm formed by aggregation of cellulose molecules. For example, typical cellulose microfibrils may be formed as aggregates of cellulose fibers having an average fiber diameter as indicated above.

The amount of hard-to-disperse fillers per 100 parts by mass of the rubber components in the coating rubber composition for the belt-reinforcing layer is preferably 1 part by mass or more, more preferably 3 parts by mass or more, still more preferably 5 parts by mass or more. The upper limit of the amount is preferably 50 parts by mass or less, more preferably 30 parts by mass or less, still more preferably 20 parts by mass or less, particularly preferably 10 parts by mass or less. When the amount is within the range indicated above, the advantageous effect tends to be better achieved.

The coating rubber composition for the belt-reinforcing layer may contain a plasticizer.

Plasticizers refer to materials that can impart plasticity to rubber components. Examples include liquid plasticizers (plasticizers which are liquid at room temperature (25°C)) and resins (resins which are solid at room temperature (25°C)).

The amount of plasticizers (the total amount of plasticizers) per 100 parts by mass of the rubber components in the coating rubber composition for the belt-reinforcing layer is preferably 50 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved. It should be noted that when the above-mentioned extended rubbers are used, the amount of the extender components used in the extended rubbers are included in the amount of plasticizers.

Any liquid plasticizer (plasticizer which is liquid at room temperature (25°C)) may be used in the coating rubber composition for the belt-reinforcing layer, and examples include oils and liquid polymers (liquid resins, liquid diene polymers, etc.). These may be used alone or in combinations of two or more.

The amount of liquid plasticizers per 100 parts by mass of the rubber components in the coating rubber composition for the belt-reinforcing layer is preferably 50 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved. Here, the same range is also suitable for the amount of oils.

Examples of oils include process oils, plant oils, and mixtures thereof. Examples of process oils include paraffinic process oils such as mild extract solvate (MES), distillate aromatic extract (DAE), treated distillate aromatic extract (TDAE), treated residual aromatic extract (TRAE), and residual aromatic extract (RAE), aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Usable commercial products are available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., The Nisshin Oillio Group., Ltd., etc. Process oils, such as paraffinic process oils, aromatic process oils, and naphthenic process oils, and plant oils are preferred among these. From the standpoint of life cycle assessment, oils obtained by purifying lubricating oils used in rubber mixing machines, engines, or other applications, or waste cooking oils used in cooking establishments may also be used as the oils.

Examples of liquid resins include terpene resins (including terpene-phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins. Hydrogenated products of the foregoing resins are also usable.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. These polymers may be modified at the chain end or backbone with a polar group. Hydrogenated products of these polymers are also usable.

Examples of the resins (resins which are solid at room temperature (25°C)) usable in the coating rubber composition for the belt-reinforcing layer include aromatic vinyl polymers, coumarone-indene resins, coumarone resins, indene resins, phenol resins, rosin resins, petroleum resins, terpene resins, and acrylic resins, all of which are solid at room temperature (25°C). These resins may also be hydrogenated. These may be used alone or in combinations of two or more. Aromatic vinyl polymers, petroleum resins, and terpene resins are preferred among these.

When the coating rubber composition for the belt-reinforcing layer contains the above-mentioned resins, the amount of the above-mentioned resins per 100 parts by mass of the rubber components is preferably 100 parts by mass or less, more preferably 30 parts by mass or less, still more preferably 10 parts by mass or less, particularly preferably 5 parts by mass or less, and may be 0 parts by mass. When the amount is within the range indicated above, the advantageous effect tends to be better achieved.

The softening point of the above-mentioned resins is preferably 60°C or higher, more preferably 70°C or higher, still more preferably 80°C or higher. The upper limit is preferably 160°C or lower, more preferably 130°C or lower, still more preferably 115°C or lower. When the softening point is within the range indicated above, the handling stability during high-speed driving tends to be improved.

Here, the softening point of the resins is determined as set forth in JIS K 6220-1:2001 using a ring and ball softening point measuring apparatus and defined as the temperature at which the ball drops down. The softening point of the resins is usually higher by 50°C $\pm$ 5°C than the glass transition temperature of the resins.

The aromatic vinyl polymers refer to polymers containing aromatic vinyl monomers as structural units. Examples include resins produced by polymerization of $\alpha$-methylstyrene and/or styrene. Specific examples include styrene homopolymers (styrene resins), $\alpha$-methylstyrene homopolymers ($\alpha$-methylstyrene resins), copolymers of $\alpha$-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, $\alpha$-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reacting phenol with an aldehyde such as formaldehyde, acetaldehyde, or furfural in the presence of an acid or alkali catalyst. Preferred among these are those produced by reacting them in the presence of an acid catalyst, such as novolac phenol resins.

Examples of the rosin resins include rosin resins typified by natural rosins, polymerized rosins, modified rosins, and esterified compounds thereof, and hydrogenated products thereof.

Examples of the petroleum resins include C5 resins, C9 resins, C5/C9 resins, dicyclopentadiene (DCPD) resins, and hydrogenated products of the foregoing resins. DCPD resins or hydrogenated DCPD resins are preferred among these.

The terpene resins refer to polymers containing terpenes as structural units. Examples include polyterpene

resins produced by polymerization of terpene compounds, and aromatic modified terpene resins produced by polymerization of terpene compounds and aromatic compounds. Hydrogenated products of these resins are also usable.

The polyterpene resins refer to resins produced by polymerization of terpene compounds. The terpene compounds refer to hydrocarbons having a composition represented by $(C_5H_8)_n$ or oxygen-containing derivatives thereof, each of which has a terpene backbone and is classified as a monoterpene ($C_{10}H_{16}$), sesquiterpene ($C_{15}H_{24}$), diterpene ($C_{20}H_{32}$), or other terpene. Examples of such terpene compounds include α-pinene, β-pinene, dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, α-pinene and β-pinene, are classified into β-pinene resins mainly containing β-pinene and α-pinene resins mainly containing α-pinene, depending on the proportions of the components in the resins.

Examples of the aromatic modified terpene resins include terpene-phenol resins made from the above-mentioned terpene compounds and phenolic compounds, and terpene-styrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol, and examples of the styrene compounds include styrene and α-methylstyrene.

The acrylic resins refer to polymers containing acrylic monomers as structural units. Examples include styrene acrylic resins such as those which contain carboxy groups and are produced by copolymerization of aromatic vinyl monomer components and acrylic monomer components. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45, all of which are herein incorporated by reference) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), (meth)acrylamide, and (meth)acrylamide derivatives. Here, the term "(meth)acrylic acid" is a general term for acrylic acid and methacrylic acid.

Examples of the aromatic vinyl monomer components of the acrylic resins include aromatic vinyls such as styrene, α-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The coating rubber composition for the belt-reinforcing layer preferably contains an antioxidant from the standpoint of crack resistance and ozone resistance.

Non-limiting examples of antioxidants include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Among these, p-phenylenediamine or quinoline antioxidants are preferred, and N-(1,3-dimethylbutyl)-N'-phenyl-p-phenylenediamine or polymerized 2,2,4-trimethyl-1,2-dihydroquinoline is more preferred. Usable commercial products are available from, for example, Seiko Chemical Co., Ltd., Sumitomo Chemical Co., Ltd., Ouchi Shinko Chemical Industrial Co., Ltd., Flexsys, etc.

The amount of antioxidants per 100 parts by mass of the rubber components in the coating rubber composition for the belt-reinforcing layer is preferably 0.2 parts by mass or more, more preferably 0.5 parts by mass or more, still more preferably 2.0 parts by mass or more. The amount is preferably 7.0 parts by mass or less, more preferably 4.0 parts by mass or less.

The rubber composition preferably contains stearic acid.

The amount of stearic acid per 100 parts by mass of the rubber components in the coating rubber composition

for the belt-reinforcing layer is preferably 0.5 to 10 parts by mass, more preferably 0.5 to 4 parts by mass.

Here, conventionally known stearic acid may be used, including, for example, those available from NOF Corporation, Kao Corporation, FUJIFILM Wako Pure Chemical Corporation, Chiba Fatty Acid Co., Ltd., etc.

The coating rubber composition for the belt-reinforcing layer preferably contains zinc oxide.

The amount of zinc oxide per 100 parts by mass of the rubber components in the coating rubber composition for the belt-reinforcing layer is preferably 0.5 to 10 parts by mass, more preferably 1 to 3 parts by mass.

Here, conventionally known zinc oxide may be used, including, for example, those available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc.

The coating rubber composition for the belt-reinforcing layer may contain a wax.

The amount of waxes per 100 parts by mass of the rubber components in the coating rubber composition for the belt-reinforcing layer is preferably 0.5 to 10 parts by mass, more preferably 1 to 5 parts by mass.

Any wax may be used, and examples include petroleum waxes, natural waxes, and synthetic waxes produced by purifying or chemically treating a plurality of waxes. These waxes may be used alone or in combinations of two or more.

Examples of petroleum waxes include paraffin waxes and microcrystalline waxes. Any natural wax derived from non-petroleum resources is usable. Examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Usable commercial products are available from, for example, Ouchi Shinko Chemical Industrial Co., Ltd., Nippon Seiro Co., Ltd., Seiko Chemical Co., Ltd., etc.

The coating rubber composition for the belt-reinforcing layer preferably contains sulfur to moderately form crosslinks between the polymer chains, thereby providing good properties.

The amount of sulfur per 100 parts by mass of the rubber components in the coating rubber composition for the belt-reinforcing layer is preferably 0.1 parts by mass or more, more preferably 1.0 parts by mass or more, still more preferably 1.7 parts by mass or more. The amount is preferably 5.0 parts by mass or less, more preferably 3.0 parts by mass or less, still more preferably 2.0 parts by mass or less.

Examples of sulfur include those commonly used in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The coating rubber composition for the belt-reinforcing layer preferably contains a vulcanization accelerator.

The amount of vulcanization accelerators in the coating rubber composition for the belt-reinforcing layer is not limited and may be freely determined according to the desired curing rate and crosslink density. The amount of vulcanization accelerators per 100 parts by mass of the rubber components is preferably 0.5 parts by mass or more, more preferably 2.0 parts by mass or more, still more preferably 2.7 parts by mass or more. The upper limit is preferably 8.0 parts by mass or less, more preferably 6.0 parts by mass or less, still more preferably 5.0 parts by mass or less.

Any type of vulcanization accelerator may be used, including those generally used. Examples of vulcanization accelerators include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolylsulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These may be used alone or in combinations of two or more. Sulfenamide, guanidine, and benzothiazole vulcanization accelerators are preferred among these.

In addition to the above-mentioned components, the coating rubber composition for the belt-reinforcing layer may appropriately contain compounding agents commonly used in the tire industry such as releasing agents or other materials.

Materials as described for the reinforcement rubber 17 (coating rubber composition for belt-reinforcing layer) may also be used in the belt layer-coating rubber (the topping rubber 10 coating the belt cords 9) or other tire components while appropriately changing the amounts of the materials.

Moreover, the reinforcement rubber 17 (coating rubber composition for belt-reinforcing layer) may be the same as or different from the rubber composition of the topping rubber 10.

The coating rubber composition for the belt-reinforcing layer may be prepared by known methods. For example, it may be prepared by kneading the components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 50 to 200°C, preferably 80 to 190°C. The

kneading time is usually 30 seconds to 30 minutes, preferably one minute to 30 minutes. In a final kneading step of kneading vulcanizing agents and vulcanization accelerators, the kneading temperature is usually 100°C or lower, preferably from room temperature to 80°C. Then, the composition obtained after kneading vulcanizing agents and vulcanization accelerators is usually vulcanized by press vulcanization, for example. The vulcanization temperature is usually 120 to 200°C, preferably 140 to 180°C.

The belt-reinforcing layer 15 that includes the reinforcement material 16 (reinforcement cords) and the reinforcement rubber 17 (coating rubber composition for belt-reinforcing layer) coating the reinforcement cords 16 may be applied to a tire such as a pneumatic tire or a non-pneumatic tire, preferably a pneumatic tire. In particular, the tire may be suitably used as a summer tire or winter tire (e.g., studless winter tire, cold weather tire, snow tire, studded tire). The tire may be used as a tire for passenger cars, large passenger cars, large SUVs, heavy duty vehicles such as trucks and buses, light trucks, or motorcycles, or as a racing tire (high performance tire), etc.

The tire can be produced from the reinforcement material 16 (reinforcement cords) and the reinforcement rubber 17 (coating rubber composition for belt-reinforcing layer) coating the reinforcement cords 16 by usual methods. For example, a reinforcement material 16 (reinforcement cords) and a reinforcement rubber 17 (coating rubber composition for belt-reinforcing layer) coating the reinforcement cords 16, before vulcanization, may be combined and extruded into the shape of a belt-reinforcing layer 15, and then formed together with other tire components on a tire building machine in a usual manner to build an unvulcanized tire. The unvulcanized tire may be heated and pressurized in a vulcanizer to produce a tire.

FIG. 3 is an enlarged view of a tread portion 2.

A tire 1 is provided with a belt layer 7 embedded inside the tread portion 2, and a belt-reinforcing layer 15 including reinforcement cords 16 which is located outward of the belt layer 7 with respect to the tire radial direction. The tread portion 2 is partitioned by a main circumferential groove 20.

The tire 1 satisfies the following relationship (2):

$$d/L \leq 0.80$$

wherein d represents the equivalent cross-sectional diameter (mm) of the reinforcement material 16 (reinforcement cords), and L represents the distance (mm) from the tread groove bottom 21 to the belt-reinforcing layer 15.

The ratio d/L is preferably 0.70 or lower, more preferably 0.60 or lower, still more preferably 0.555 or lower, particularly preferably 0.50 or lower. The lower limit is preferably 0.10 or higher, more preferably 0.20 or higher, still more preferably 0.27 or higher, particularly preferably 0.30 or higher. When the ratio is within the range indicated above, the advantageous effect can be suitably achieved.

The distance L (mm) from the tread groove bottom 21 to the belt-reinforcing layer 15 in the tire 1 desirably satisfies the following relationship:

$$L \geq 0.90 \text{ mm}.$$

The L is preferably 1.00 mm or more, more preferably 1.10 mm or more, still more preferably 1.50 mm or more, particularly preferably 1.70 mm or more. The upper limit is preferably 2.50 mm or less, more preferably 2.30 mm or less, still more preferably 2.00 mm or less.

The reason why the above-mentioned advantageous effect can be provided when the distance L is not less than a predetermined value, particular when L ≥ 1.00 mm, is not exactly clear, but the advantageous effect is believed to be due to the following mechanism.

When the distance L is not less than a predetermined value, as the distance from the groove bottom to the reinforcement material is increased, the deformation during rolling may not easily be transferred to the reinforcement material, and fracture of the reinforcement material can be easily inhibited. Therefore, it is believed that the durability during high-speed driving can be significantly improved.

Herein, the tread groove bottom 21 refers to the deepest part of the main circumferential groove, which is the radially innermost (with respect to the tire) surface of the main circumferential groove.

Herein, the distance L (mm) from the tread groove bottom 21 to the belt-reinforcing layer 15 refers to the distance from the tread groove bottom 21 to the radially outer (with respect to the tire) surface 23 of the belt-reinforcing layer 15. The distance L corresponds to the distance from the bottom of the main circumferential groove closest to the tire equator to the radially outer surface of the belt-reinforcing layer 15 in a cross-section of the tire taken along the radial direction, with the width between the bead portions being fixed to the normal rim width. The distance L is measured along the normal of the radially outer surface of the belt-reinforcing layer 15.

Herein, the dimensions (dimensions such as the distance L from the tread groove bottom to the belt-reinforcing

layer) and angles of the tire are measured in a cross-section of the tire taken along the radial direction, unless otherwise stated. In the measurement, the width between the bead portions of the tire is fixed to the normal rim width. Moreover, when, for example, the angle of the cords in the belt layer 7 or belt-reinforcing layer 15 with respect to the tire circumferential direction is measured, it may be determined by peeling the tread portion from the cross-section and observing it from the tire radial direction.

Likewise, the equivalent cross-sectional diameter d of the reinforcement material (reinforcement cords), the distance L from the tread groove bottom to the belt-reinforcing layer, the number of ends of the reinforcement cords per 50 mm width, and the ratio of the cross-sectional area of the reinforcement material (reinforcement cords) to the cross-sectional area of the belt-reinforcing layer (the percentage of the reinforcement cords based on 100% of the cross-sectional area) per 50 mm width can be measured in a cross-section of the tire taken along the radial direction, unless otherwise stated.

Although particularly preferred embodiments of the present invention are described in detail above, the present invention is not limited to the embodiments shown in the figures and may be implemented in various modified embodiments.

## EXAMPLES

Examples (working examples) which are considered preferable to implement the invention are described below although the scope of the present invention is not limited to the examples.

Prototypes of 195/65R15 pneumatic passenger car tires (test tires) having the basic structure shown in FIG. 1 are produced according to the specifications (cord material, equivalent cross-sectional diameter d of reinforcement cords, distance L from tread groove bottom to belt-reinforcing layer, etc.) indicated in the tables.

The common specifications of the test tires are as follows.

Belt ply: two pieces
Angle of belt cords with respect to tire circumferential direction: 20 degrees (crossed)
Belt cord type: single wire
Number of ends of belt cords: 36
Belt cord diameter: 0.32 mm

The test tires prepared according to the specifications varied as shown in the tables were simulated, and the results calculated according to the below-described evaluation are shown in the tables.

Here, the standard comparative example is Comparative Example 7.

### <Durability during high-speed driving>

The test tires are mounted on a drum tester. The rotational speed is gradually increased from 100 km/hr, and the speed at which fracture occurs is measured and expressed as an index (high-speed durability index) relative to that of the standard comparative example taken as 100. A higher index indicates a higher speed at which fracture occurs and better durability during high-speed driving.

[Table 1]

Belt-reinforcing layer

| | | Example | | | | | | | | | | | | | | | |
|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 |
| Specification of reinforcement cords | Cord material | Nylon 6, 10 | Nylon 6, 10 | Nylon 6, 10 | Nylon 6, 10 | Nylon 6, 10 | Nylon 6, 10 | Nylon 6, 10 | Nylon 6, 10 | Nylon 4, 10 | Nylon 4, 10 | Nylon 4, 10 | Nylon 4, 10 | Nylon 4, 10 | Nylon 4, 10 | Nylon 4, 10 | Nylon 4, 10 |
| | Equivalent cross-sectional diameter d [mm] of reinforcement cords | 0.18 | 0.30 | 0.85 | 1.10 | 0.66 | 0.55 | 0.15 | 1.15 | 0.68 | 0.85 | 1.10 | 0.17 | 0.85 | 0.55 | 0.15 | 1.20 |
| | Distance L [mm] from tread groove bottom to belt-reinforcing layer | 0.90 | 1.10 | 1.70 | 2.20 | 1.80 | 1.80 | 1.10 | 2.20 | 0.97 | 1.70 | 2.20 | 1.70 | 1.60 | 1.70 | 1.30 | 1.80 |
| | d/L | 0.20 | 0.27 | 0.50 | 0.50 | 0.37 | 0.31 | 0.14 | 0.52 | 0.70 | 0.50 | 0.50 | 0.10 | 0.53 | 0.32 | 0.12 | 0.67 |
| | Number of twists [t/10 cm] | 15.0 | 20.0 | 31.5 | 24.0 | 9.0 | 65.0 | 42.0 | 21.0 | 25.0 | 31.5 | 15.0 | 50.0 | 9.0 | 65.0 | 55.0 | 20.0 |
| | Total fineness [dtex] | 520 | 940 | 4200 | 5000 | 2800 | 1880 | 450 | 5500 | 2800 | 4200 | 5000 | 500 | 4200 | 1880 | 450 | 6000 |
| | Melting point of cord material [°C] | 225 | 225 | 225 | 225 | 225 | 225 | 225 | 225 | 250 | 250 | 250 | 250 | 250 | 250 | 250 | 250 |
| | Number of ends of reinforcement cords per 50 mm width [ends] | 80 | 72 | 34 | 28 | 40 | 45 | 78 | 34 | 52 | 34 | 28 | 76 | 55 | 60 | 78 | 32 |
| | Ratio of cross-sectional area of reinforcement cords to cross-sectional area of belt-reinforcing layer per 50 mm width [%] | 20 | 25 | 40 | 38 | 37 | 30 | 15 | 50 | 48 | 40 | 38 | 15 | 52 | 40 | 12 | 48 |
| Evaluation | Durability during high-speed driving | 110 | 125 | 130 | 115 | 110 | 115 | 105 | 115 | 115 | 130 | 110 | 105 | 110 | 115 | 110 | 115 |

[Table 2]

Belt-reinforcing layer

| | | Comparative Example | | | | | | |
|---|---|---|---|---|---|---|---|---|
| | | 1 | 2 | 3 | 4 | 5 | 6 | 7 |
| Specification of reinforcement cords | Cord material | Nylon 6, 6 | Nylon 6, 6 | Nylon 6, 10 | Nylon 4, 10 | Nylon 6, 10 | Nylon 4, 10 | Nylon 6, 6 |
| | Equivalent cross-sectional diameter d [mm] of reinforcement cords | 0.20 | 0.18 | 0.20 | 0.20 | 0.81 | 0.90 | 0.68 |
| | Distance L [mm] from tread groove bottom to belt-reinforcing layer | 0.24 | 0.90 | 0.24 | 0.24 | 0.95 | 1.06 | 1.40 |
| | d/L | 0.82 | 0.20 | 0.82 | 0.82 | 0.85 | 0.85 | 0.49 |
| | Number of twists [t/10 cm] | 8.0 | 15.0 | 8.0 | 8.0 | 30.0 | 35.0 | 25.0 |
| | Total fineness [dtex] | 600 | 520 | 600 | 600 | 4200 | 4600 | 2800 |
| | Melting point of cord material [°C] | 265 | 265 | 225 | 250 | 225 | 250 | 265 |
| | Number of ends of reinforcement cords per 50 mm width [ends] | 80 | 80 | 80 | 80 | 55 | 34 | 52 |
| | Ratio of cross-sectional area of reinforcement cords to cross-sectional area of belt-reinforcing layer per 50 mm width [%] | 23 | 22 | 23 | 23 | 62 | 40 | 39 |
| Evaluation | Durability during high-speed driving | 80 | 95 | 85 | 85 | 90 | 90 | 100 |

Exemplary embodiments of the present invention include:

Embodiment 1. A tire, including a tread portion and a belt-reinforcing layer,
the belt-reinforcing layer containing a reinforcement material including a compound represented by the following formula (1):

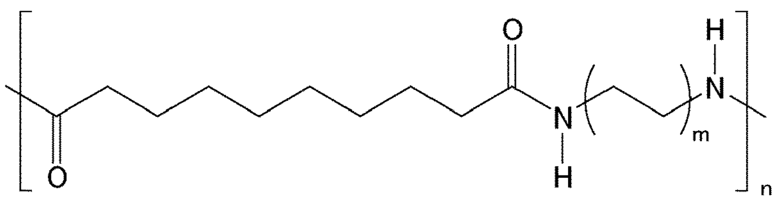

(1)

wherein m is 2 or 3, and n is an integer,
the tire satisfying the following relationship (2):

$$(2)\ d/L \leq 0.80$$

wherein d represents an equivalent cross-sectional diameter (mm) of the reinforcement material, and L represents a distance (mm) from a tread groove bottom to the belt-reinforcing layer.

Embodiment 2. The tire according to Embodiment 1,
wherein the d (mm) satisfies the following relationship:

$$0.20\ \text{mm} < d < 1.00\ \text{mm}.$$

Embodiment 3. The tire according to Embodiment 1 or 2,
wherein the distance L (mm) satisfies the following relationship:

$$L \geq 1.00\ \text{mm}.$$

Embodiment 4. The tire according to any one of Embodiments 1 to 3,
wherein the reinforcement material is formed from cords having a number of twists of 10.0 to 60.0 (t/10 cm).
Embodiment 5. The tire according to any one of Embodiments 1 to 4,
wherein the reinforcement material is formed from cords having a total fineness of 500 to 5000 dtex.
Embodiment 6. The tire according to any one of Embodiments 1 to 5,
wherein a number of ends of the reinforcement material per 50 mm width is 30 to 80.
Embodiment 7. The tire according to any one of Embodiments 1 to 6,
wherein a ratio (%) of a cross-sectional area of the reinforcement material to a cross-sectional area of the belt-reinforcing layer per 50 mm width is 15 to 55%.

REFERENCE SIGNS LIST

1 tire
2 tread portion
4 bead portion
6 carcass
7 belt layer
8 belt ply
8A first belt ply
8B second belt ply
9 belt cord
10 topping rubber
15 belt-reinforcing layer
16 reinforcement material (reinforcement cords)
17 reinforcement rubber
20 main circumferential groove
21 tread groove bottom
23 radially outer (with respect to tire) surface
W1 width of first belt ply 8A with respect to tire axial direction
W2 width of second belt ply 8B with respect to tire axial direction
TW tread width
Te tread edge
L distance from tread groove bottom 21 to belt-reinforcing layer 15

Provided is a tire having excellent durability during highspeed driving. The present invention relates to a tire including a tread portion and a belt-reinforcing layer, the belt-reinforcing layer containing a reinforcement material including a compound represented by the following formula (1) :

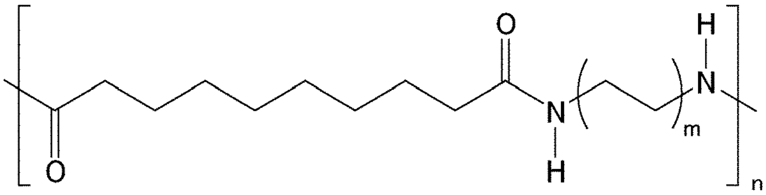

(1)

wherein m is 2 or 3, and n is an integer, the tire satisfying relationship (2) with respect to the equivalent cross-sectional diameter d (mm) of the reinforcement material and the distance L (mm) from the tread groove bottom to the belt-reinforcing layer.

## Claims

1. A tire, comprising a tread portion and a belt-reinforcing layer,

   the belt-reinforcing layer comprising a reinforcement material comprising a compound represented by the following formula (1):

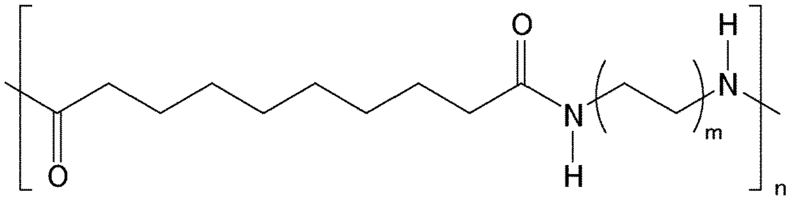

(1)

   wherein m is 2 or 3, and n is an integer,
   the tire satisfying the following relationship (2):

$$(2)\ d/L \leq 0.80$$

   wherein d represents an equivalent cross-sectional diameter (mm) of the reinforcement material, and L represents a distance (mm) from a tread groove bottom to the belt-reinforcing layer.

2. The tire according to claim 1,
   wherein the d (mm) satisfies the following relationship:

$$0.20\ mm < d < 1.00\ mm.$$

3. The tire according to claim 1 or 2,
   wherein the distance L (mm) satisfies the following relationship:

$$L \geq 1.00\ mm.$$

4. The tire according to any one of claims 1 to 3,
   wherein the reinforcement material is formed from cords having a number of twists of 10.0 to 60.0 (t/10 cm).

5. The tire according to any one of claims 1 to 4,
   wherein the reinforcement material is formed from cords having a total fineness of 500 to 5000 dtex.

**6.** The tire according to any one of claims 1 to 5, wherein a number of ends of the reinforcement material per 50 mm width is 30 to 80.

**7.** The tire according to any one of claims 1 to 6, wherein a ratio (%) of a cross-sectional area of the reinforcement material to a cross-sectional area of the belt-reinforcing layer per 50 mm width is 15 to 55%.

FIG.1

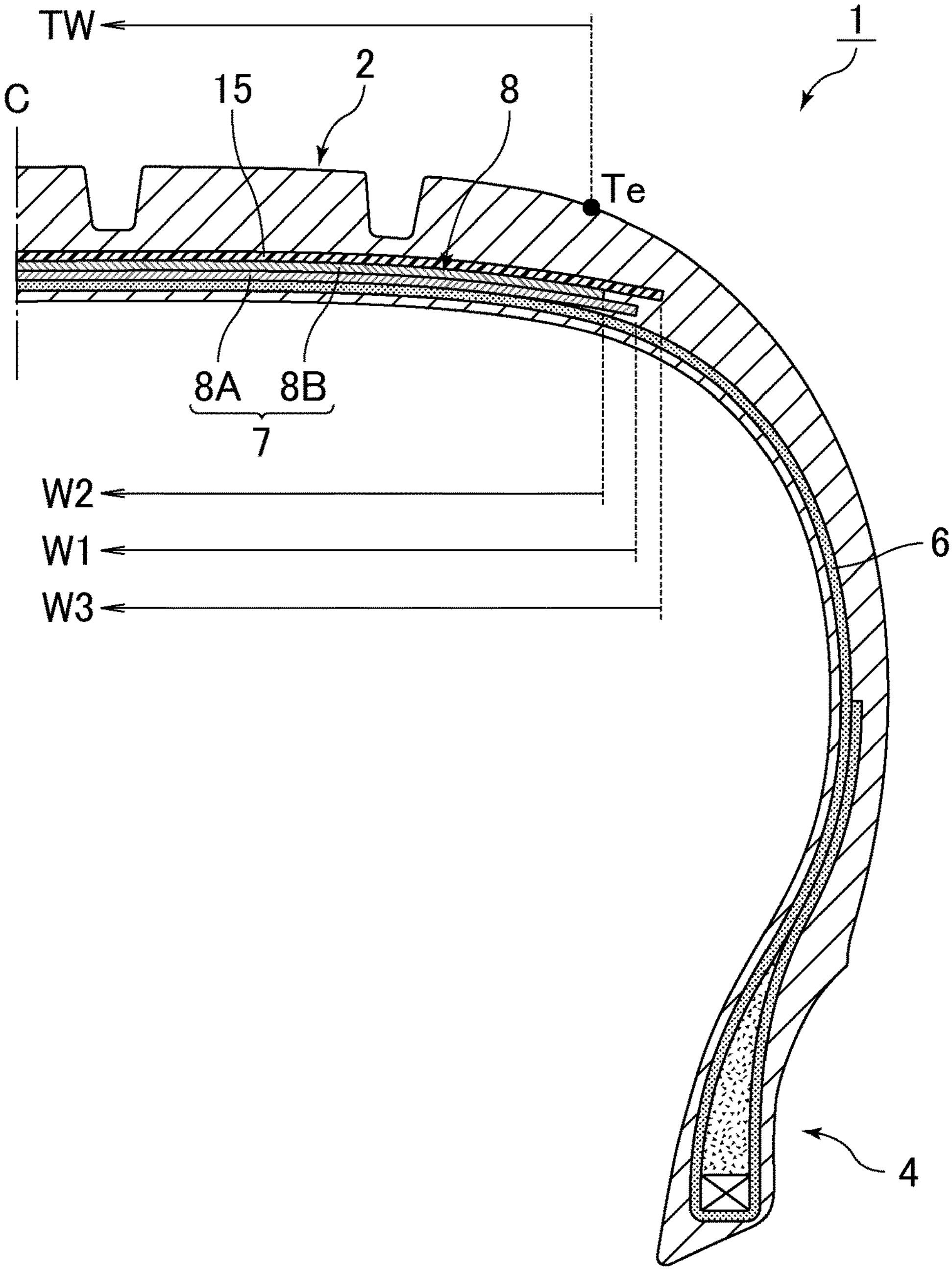

FIG.2

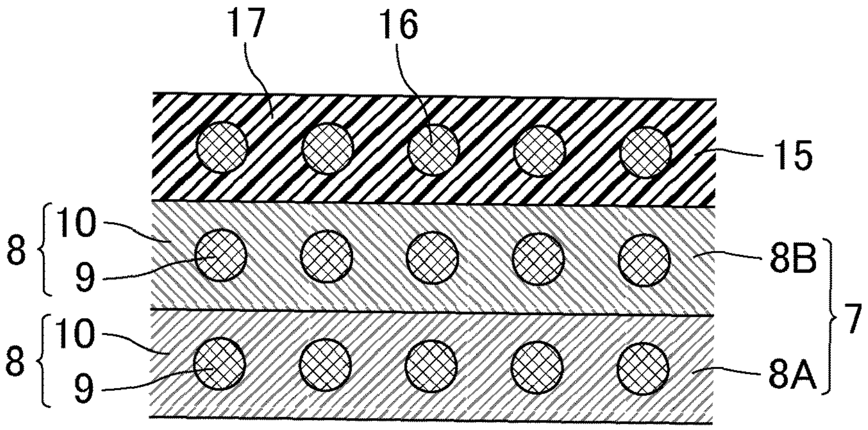


FIG.3

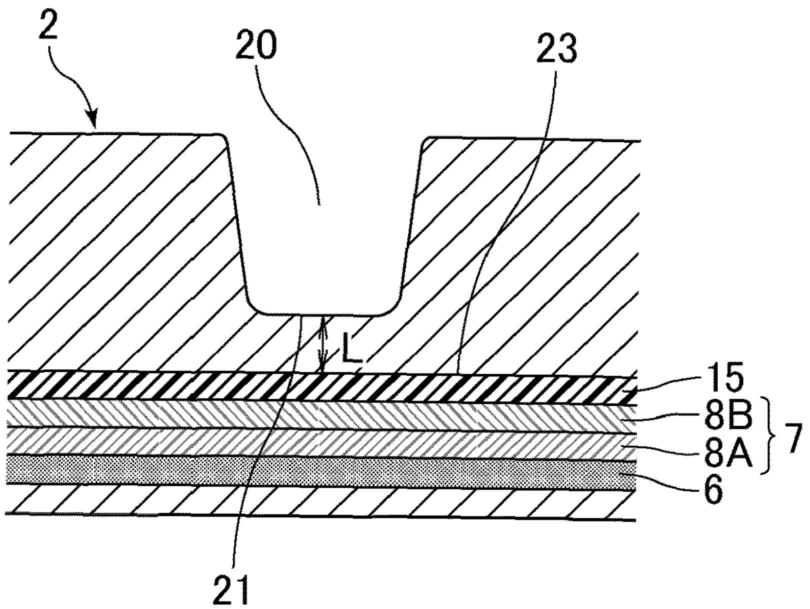

Europäisches Patentamt
European Patent Office
Office européen des brevets

# EUROPEAN SEARCH REPORT

Application Number
EP 23 16 4000

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/184749 A1 (ADACHI KAZUHIDE [JP]) 20 June 2019 (2019-06-20) * examples 1-4 * ----- | 1-7 | INV. B60C1/00 |
| | | | TECHNICAL FIELDS SEARCHED (IPC) |
| | | | B60C |

The present search report has been drawn up for all claims

1

| Place of search | Date of completion of the search | Examiner |
|---|---|---|
| Munich | 17 August 2023 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 23 16 4000

This annex lists the patent family members relating to the patent documents cited in the above-mentioned European search report. The members are as contained in the European Patent Office EDP file on
The European Patent Office is in no way liable for these particulars which are merely given for the purpose of information.

17-08-2023

| Patent document cited in search report | Publication date | Patent family member(s) | Publication date |
|---|---|---|---|
| US 2019184749 A1 | 20-06-2019 | CN 109941046 A | 28-06-2019 |
| | | DE 102018130338 A1 | 19-06-2019 |
| | | US 2019184749 A1 | 20-06-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 48011335 A
- US 4414370 A
- JP S596207 A
- JP H558005 B
- JP H1313522 A
- US 5010166 A


### Non-patent literature cited in the description


- annual research report TREND. Toagosei Co., Ltd, 2000, vol. 3, 42-45